# EUROPEAN PATENT SPECIFICATION

(11) **EP 3 643 095 B1**
(45) Date of publication and mention of the grant of the patent: **26.01.2022**
(21) Application number: 18822948.8
(22) Date of filing: 26.06.2018
(51) Int. Cl.: H04W 60/02, H04W 48/18

(54) **METHOD FOR PERFORMING RLAU PROCEDURE AND DEVICE SUPPORTING THE SAME**
VERFAHREN ZUR DURCHFÜHRUNG EINES RLAU VERFAHRENS UND VORRICHTUNG DAMIT
PROCÉDÉ DE MISE EN OEUVRE D'UNE PROCÉDURE RLAU ET DISPOSITIF PRENANT EN CHARGE LEDIT PROCÉDÉ

(30) Priority: 27.06.2017 US 201762525217 P
(43) Date of publication of application: 29.04.2020
(73) Proprietor: LG Electronics Inc., Seoul 07336 (KR)
(72) Inventor: LEE, Youngdae, Seoul 06772 (KR); BYUN, Bokyung, Seoul 06772 (KR)
(74) Representative: Plasseraud IP
(86) International application number: PCT/KR2018/007215
(87) International publication number: WO 2019/004692

(56) References cited:
- WO-A1-2017/069597
- US-A1- 2014 194 150
- INTERDIGITAL INC: "RAN Location Area Update Procedure for NR", 3GPP DRAFT; R2-1706698 (R15 NR WI AI104162 RLAU PROCEDURE), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Qingdao, China; 20170627 - 20170629 16 June 2017 (2017-06-16), XP051306583, Retrieved from the Internet: URL:http://www.3gpp.org/ftp/tsg_ran/WG2_RL 2/TSGR2_AHs/2017_06_NR/Docs/ [retrieved on 2017-06-16]
- HUAWEI ET AL: "Discussion on CN location Update and RNA Update for inactive state", 3GPP DRAFT; R2-1706736 DISCUSSION ON CN LOCATION UPDATE AND RNA UPDATE FOR INACTIVE STATE, 3RD GENERATION PARTNERSHIP PROJECT (3GPP), MOBILE COMPETENCE CENTRE ; 650, ROUTE DES LUCIOLES ; F-06921 SOPHI , vol. RAN WG2, no. Qingdao, China; 20170627 - 20170629 17 June 2017 (2017-06-17), XP051307105, Retrieved from the Internet: URL:http://www.3gpp.org/ftp/tsg_ran/WG2_RL 2/TSGR2_AHs/2017_06_NR/Docs/ [retrieved on 2017-06-17]
- HUAWEI HISILICON: "Discussion on LAU and RNA Update for inactive state", 3GPP DRAFT; R2-1703390 DISCUSSION ON LAU AND RNA UPDATE FOR INACTIVE STATE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG2, no. Spokane, Washington, USA; 20170403 - 20170407 24 March 2017 (2017-03-24), XP051253927, Retrieved from the Internet: URL:http://www.3gpp.org/ftp/tsg_ran/WG2_RL 2/TSGR2_97bis/Docs/ [retrieved on 2017-03-24]
- LG ELECTRONICS INC: "Timer handling of RAN-based location area update", 3GPP DRAFT; R2-1711149_TIMER HANDLING OF RAN-BASED LOCATION AREA UPDATE_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG2, no. Prague, Czech; 20171009 - 20171013 29 September 2017 (2017-09-29), XP051355424, Retrieved from the Internet: URL:http://www.3gpp.org/ftp/tsg_ran/WG2_RL 2/TSGR2_99bis/Docs/ [retrieved on 2017-09-29]
- LG ELECTRONICS: "TS 23.501: Update to RRC-Inactive", S2-174417 , SA WG2 Meeting #122, 20 June 2017 (2017-06-20), XP051303269, San Jose Del Cabo, Mexico
- ERICSSON: "RAN Area update in RRC_INACTIVE", R2-1707299, 3GPP TSG RAN WG2 NR AdHoc#2, 16 June 2017 (2017-06-16), XP051301787, Qingdao, P.R. of China
- INTEL CORPORATION: "RAN paging failure handling", R3-172305, 3GPP TSG RAN WG3 NR#2 Adhoc, 20 June 2017 (2017-06-20), XP051302252, Qingdao, China
- INTERDIGITAL INC.: "RAN Location Area Update Procedure for NR", R2-1706698, 3GPP TSG RAN WG2 NR AdHoc#2, 16 June 2017 (2017-06-16), XP051252913, Qingdao, P.R. of China

## Description

### BACKGROUND OF THE INVENTION

### Technical Field

The present invention relates to a wireless communication system, and more particularly, to a method for performing RLAU procedure, and a corresponding user equipment.

### Background Art

Efforts have been made to develop an improved 5^{th}-generation (5G) communication system or a pre-5G communication system in order to satisfy a growing demand on radio data traffic after commercialization of a 4^{th}-generation (4G) communication system. A standardization act for a 5G mobile communication standard work has been formally started in 3GPP, and there is ongoing discussion in a standardization working group under a tentative name of a new radio access (NR).

Meanwhile, an upper layer protocol defines a protocol state to consistently manage an operational state of a user equipment (UE), and indicates a function and procedure of the UE in detail. In the discussion on the NR standardization, an RRC state is discussed such that an RRC_CONNECTED state and an RRC_IDLE state are basically defined, and an RRC_INACTIVE state is additionally introduced.

Meanwhile, a UE is allowed to move within a RAN-based Notification Area (RNA) without notifying its movement to the network while being in RRC_INACTIVE. In other words, the UE in RRC_INACTIVE initiates RAN-based location area update (RLAU) upon re-selecting to camp on a cell not belonging to the configured RNA. In addition RLAU is periodically performed by the UE to notify the availability of the UE to the network. Document: INTERDIGITAL INC, "RAN Location Area Update Procedure for NR", vol. RAN WG2, no. Qingdao, China; 20170627 - 20170629, (20170616), 3GPP DRAFT; R2-1706698 (R15 NR WI AI104162 RLAU PROCEDURE), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL http://www.3gpp.org/ftp/tsg_ran/WG2_RL2/TSGR2_AHs/2017_06_NR/Docs/, (20170616), relates to a RAM location area update procedure in 3GPP. US2014/194150 relates to a method that includes: judging that no location update initiated by a terminal is received when a reachable timer corresponding to the terminal is expired, then sending paging message to the terminal, and triggering the terminal to initiate an interaction process with a network side to determine the terminal state.

### DISCLOSURE OF INVENTION

### Technical problem

According to a prior art, while the UE moves back from a new cell to an old cell, it is unclear for the UE what action the UE should take after returning to the old cell.

### Solution to problem

According to one aspect of the present invention, a method according to claim 1 is provided.

According to another aspect of the present invention, a user equipment (UE) according to claim 6 is provided.

### Advantageous effects of invention

According to an embodiment of present invention, since the duration of the periodic RLAU of the UE is increased, the probability of success of the RLAU may be increased. In addition, due to a mobility of the UE in inactive condition moving back and forth, the UE may frequently move out the RNA and comes back, both the UE and the network can maintain legacy inactive condition without additional signaling within TpRLAU + Tguard.

### Brief Description of Drawings

FIG. 1 shows LTE system architecture.
FIG. 2 shows a block diagram of a control plane protocol stack of an LTE system.
FIG. 3 shows a block diagram of a user plane protocol stack of an LTE system.
FIG. 4 shows a structure of a 5G system.
FIG. 5 shows the radio interface protocol for the user plane of the 5G system.
Fig. 6 shows an example of a method for performing RLAU according to an embodiment of the present invention.
Fig. 7 shows another example of a method for performing RLAU procedure according to an embodiment of the present invention.
Fig. 8 is a flowchart illustrating a method of performing RLAU procedure according to an embodiment of the present invention.
Fig. 9 shows a communication system to implement an embodiment of the present invention.

### Mode for the Invention

The technology described below can be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), etc. The CDMA can be implemented with a radio technology such as universal terrestrial radio access (UTRA) or CDMA-2000. The TDMA can be implemented with a radio technology such as global system for mobile communications (GSM)/general packet ratio service (GPRS)/enhanced data rate for GSM evolution (EDGE). The OFDMA can be implemented with a radio technology such as institute of electrical and electronics engineers (IEEE) 802.11 (Wi-Fi), IEEE 802.16 (WiMAX), IEEE 802-20, evolved UTRA (E-UTRA), etc. IEEE 802.16m is an evolution of IEEE 802.16e, and provides backward compatibility with an IEEE 802.16-based system. The UTRA is a part of a universal mobile telecommunication system (UMTS). 3rd generation partnership project (3GPP) long term evolution (LTE) is a part of an evolved UMTS (E-UMTS) using the E-UTRA. The 3GPP LTE uses the OFDMA in downlink and uses the SC-FDMA in uplink. LTE-advance (LTE-A) is an evolution of the 3GPP LTE.

For clarity, the following description will focus on the LTE-A. However, technical features of the present invention are not limited thereto.

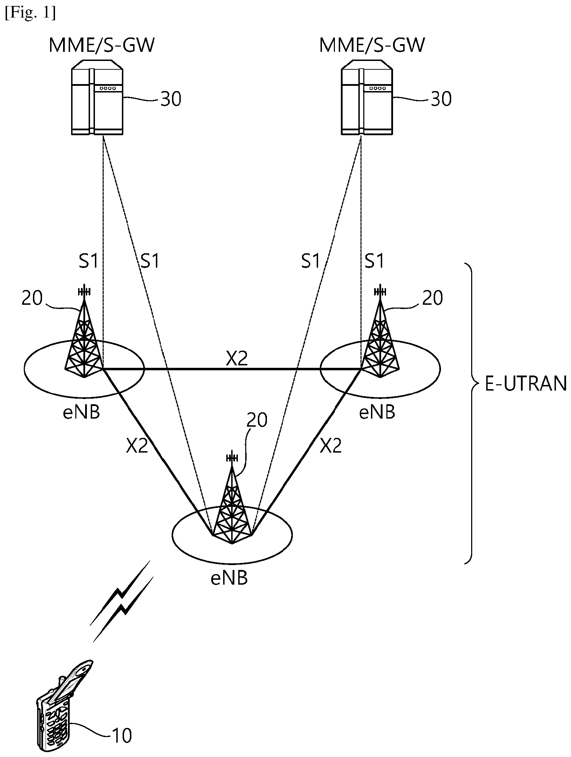

FIG. 1 shows LTE system architecture. The communication network is widely deployed to provide a variety of communication services such as voice over internet protocol (VoIP) through IMS and packet data.

Referring to FIG. 1, the LTE system architecture includes one or more user equipment (UE; 10), an evolved-UMTS terrestrial radio access network (E-UTRAN) and an evolved packet core (EPC). The UE 10 refers to a communication equipment carried by a user. The UE 10 may be fixed or mobile, and may be referred to as another terminology, such as a mobile station (MS), a user terminal (UT), a subscriber station (SS), a wireless device, etc.

The E-UTRAN may include at least one evolved node-B (eNB) 20, and a plurality of UEs may be present in one cell. An E-UTRAN system is a system evolved from the existing UTRAN system, and may be, for example, a 3GPP LTE/LTE-A system. The E-UTRAN consists of base stations (BSs) (or eNBs) which provide the UE with control plane and user plane protocols, and the BSs are connected through an X2 interface. An X2 user plane (X2-U) interface is defined between the BSs. The X2-U interface provides non-guaranteed delivery of a user plane packet data unit (PDU). An X2 control plane (X2-CP) interface is defined between two neighboring BSs. The X2-CP performs a function of context delivery between BSs, user plane tunnel control between a source BS and a target BS, handover-related message delivery, uplink load management, or the like. The BS is connected to the UE through a radio interface, and is connected to an evolved packet core (EPC) through an S1 interface. An S1 user plane (S1-U) interface is defined between the BS and a serving gateway (S-GW). An S1 control plane (S1-MME) interface is defined between the BS and a mobility management entity (MME). The S1 interface performs an evolved packet system (EPS) bearer service management function, a non-access stratum (NAS) signaling transport function, network sharing, an MME load balancing function, or the like. The S1 interface supports a many-to-many relation between the BS and the MME/S-GW.

The eNB 20 provides the UE with end points of the control plane and the user plane. The eNB 20 is generally a fixed station that communicates with the UE 10 and may be referred to as another terminology, such as a base station (BS), a base transceiver system (BTS), an access point, or the like. One eNB 20 may be arranged in every cell. At least one cell may be present in a coverage of the eNB 20. One cell is configured to have one of bandwidths selected from 1.25, 2.5, 5, 10, and 20 MHz, etc., and provides downlink (DL) or uplink (UL) transmission services to several UEs. In this case, different cells may be configured to provide different bandwidths.

Hereinafter, a downlink (DL) denotes communication from the eNB 20 to the UE 10, and an uplink (UL) denotes communication from the UE 10 to the eNB 20. In the DL, a transmitter may be a part of the eNB 20, and a receiver may be a part of the UE 10. In the UL, the transmitter may be a part of the UE 10, and the receiver may be a part of the eNB 20.

The EPC includes a mobility management entity (MME) which is in charge of control plane functions, and a system architecture evolution (SAE) gateway (S-GW) which is in charge of user plane functions. The MME/S-GW 30 may be positioned at the end of the network and connected to an external network. The MME has UE access information or UE capability information, and such information may be primarily used in UE mobility management. The S-GW is a gateway of which an endpoint is an E-UTRAN. The MME/S-GW 30 provides an end point of a session and mobility management function for the UE 10. The EPC may further include a packet data network (PDN) gateway (PDN-GW). The PDN-GW is a gateway of which an endpoint is a PDN.

The MME provides various functions including non-access stratum (NAS) signaling to eNBs 20, NAS signaling security, access stratum (AS) security control, Inter core network (CN) node signaling for mobility between 3GPP access networks, idle mode UE reachability (including control and execution of paging retransmission), tracking area list management (for UE in idle and active mode), P-GW and S-GW selection, MME selection for handovers with MME change, serving GPRS support node (SGSN) selection for handovers to 2G or 3G 3GPP access networks, roaming, authentication, bearer management functions including dedicated bearer establishment, support for public warning system (PWS) (which includes earthquake and tsunami warning system (ETWS) and commercial mobile alert system (CMAS)) message transmission. The S-GW host provides assorted functions including per-user based packet filtering (by e.g., deep packet inspection), lawful interception, UE Internet protocol (IP) address allocation, transport level packet marking in the DL, UL and DL service level charging, gating and rate enforcement, DL rate enforcement based on APN-AMBR. For clarity MME/S-GW 30 will be referred to herein simply as a "gateway," but it is understood that this entity includes both the MME and S-GW.

Interfaces for transmitting user traffic or control traffic may be used. The UE 10 and the eNB 20 are connected by means of a Uu interface. The eNBs 20 are interconnected by means of an X2 interface. Neighboring eNBs may have a meshed network structure that has the X2 interface. The eNBs 20 are connected to the EPC by means of an S1 interface. The eNBs 20 are connected to the MME by means of an S1-MME interface, and are connected to the S-GW by means of S1-U interface. The S1 interface supports a many-to-many relation between the eNB 20 and the MME/S-GW.

The eNB 20 may perform functions of selection for gateway 30, routing toward the gateway 30 during a radio resource control (RRC) activation, scheduling and transmitting of paging messages, scheduling and transmitting of broadcast channel (BCH) information, dynamic allocation of resources to the UEs 10 in both UL and DL, configuration and provisioning of eNB measurements, radio bearer control, radio admission control (RAC), and connection mobility control in LTE_ACTIVE state. In the EPC, and as noted above, gateway 30 may perform functions of paging origination, LTE_IDLE state management, ciphering of the user plane, SAE bearer control, and ciphering and integrity protection of NAS signaling.

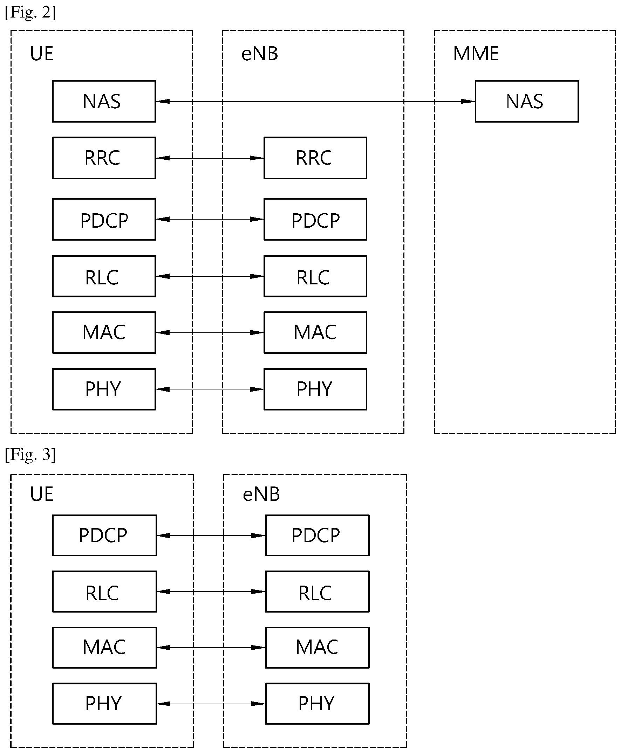

FIG. 2 shows a block diagram of a control plane protocol stack of an LTE system, and FIG. 3 shows a block diagram of a user plane protocol stack of an LTE system.

Layers of a radio interface protocol between the UE and the E-UTRAN may be classified into a first layer (L1), a second layer (L2), and a third layer (L3) based on the lower three layers of the open system interconnection (OSI) model that is well-known in the communication system. The radio interface protocol between the UE and the E-UTRAN may be horizontally divided into a physical layer, a data link layer, and a network layer, and may be vertically divided into a control plane (C-plane) which is a protocol stack for control signal transmission and a user plane (U-plane) which is a protocol stack for data information transmission. The layers of the radio interface protocol exist in pairs at the UE and the E-UTRAN, and are in charge of data transmission of the Uu interface.

A physical (PHY) layer belongs to the L1. The PHY layer provides a higher layer with an information transfer service through a physical channel. The PHY layer is connected to a medium access control (MAC) layer, which is a higher layer of the PHY layer, through a transport channel. A physical channel is mapped to the transport channel. Data is transferred between the MAC layer and the PHY layer through the transport channel. Between different PHY layers, i.e., a PHY layer of a transmitter and a PHY layer of a receiver, data is transferred through the physical channel using radio resources. The physical channel is modulated using an orthogonal frequency division multiplexing (OFDM) scheme, and utilizes time and frequency as a radio resource.

The PHY layer uses several physical control channels. A physical downlink control channel (PDCCH) reports to a UE about resource allocation of a paging channel (PCH) and a downlink shared channel (DL-SCH), and hybrid automatic repeat request (HARQ) information related to the DL-SCH. The PDCCH may carry a UL grant for reporting to the UE about resource allocation of UL transmission. A physical control format indicator channel (PCFICH) reports the number of OFDM symbols used for PDCCHs to the UE, and is transmitted in every subframe. A physical hybrid ARQ indicator channel (PHICH) carries an HARQ acknowledgement (ACK)/non-acknowledgement (NACK) signal in response to UL transmission. A physical uplink control channel (PUCCH) carries UL control information such as HARQ ACK/NACK for DL transmission, scheduling request, and CQI. A physical uplink shared channel (PUSCH) carries a UL-uplink shared channel (SCH).

A physical channel consists of a plurality of subframes in time domain and a plurality of subcarriers in frequency domain. One subframe consists of a plurality of symbols in the time domain. One subframe consists of a plurality of resource blocks (RBs). One RB consists of a plurality of symbols and a plurality of subcarriers. In addition, each subframe may use specific subcarriers of specific symbols of a corresponding subframe for a PDCCH. For example, a first symbol of the subframe may be used for the PDCCH. The PDCCH carries dynamic allocated resources, such as a physical resource block (PRB) and modulation and coding scheme (MCS). A transmission time interval (TTI) which is a unit time for data transmission may be equal to a length of one subframe. The length of one subframe may be 1 ms.

The transport channel is classified into a common transport channel and a dedicated transport channel according to whether the channel is shared or not. A DL transport channel for transmitting data from the network to the UE includes a broadcast channel (BCH) for transmitting system information, a paging channel (PCH) for transmitting a paging message, a DL-SCH for transmitting user traffic or control signals, etc. The DL-SCH supports HARQ, dynamic link adaptation by varying the modulation, coding and transmit power, and both dynamic and semi-static resource allocation. The DL-SCH also may enable broadcast in the entire cell and the use of beamforming. The system information carries one or more system information blocks. All system information blocks may be transmitted with the same periodicity. Traffic or control signals of a multimedia broadcast/multicast service (MBMS) may be transmitted through the DL-SCH or a multicast channel (MCH).

A UL transport channel for transmitting data from the UE to the network includes a random access channel (RACH) for transmitting an initial control message, a UL-SCH for transmitting user traffic or control signals, etc. The UL-SCH supports HARQ and dynamic link adaptation by varying the transmit power and potentially modulation and coding. The UL-SCH also may enable the use of beamforming. The RACH is normally used for initial access to a cell.

A MAC layer belongs to the L2. The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. A MAC sublayer provides data transfer services on logical channels.

The logical channels are classified into control channels for transferring control plane information and traffic channels for transferring user plane information, according to a type of transmitted information. That is, a set of logical channel types is defined for different data transfer services offered by the MAC layer. The logical channels are located above the transport channel, and are mapped to the transport channels.

The control channels are used for transfer of control plane information only. The control channels provided by the MAC layer include a broadcast control channel (BCCH), a paging control channel (PCCH), a common control channel (CCCH), a multicast control channel (MCCH) and a dedicated control channel (DCCH). The BCCH is a downlink channel for broadcasting system control information. The PCCH is a downlink channel that transfers paging information and is used when the network does not know the location cell of a UE. The CCCH is used by UEs having no RRC connection with the network. The MCCH is a point-to-multipoint downlink channel used for transmitting MBMS control information from the network to a UE. The DCCH is a point-to-point bi-directional channel used by UEs having an RRC connection that transmits dedicated control information between a UE and the network.

Traffic channels are used for the transfer of user plane information only. The traffic channels provided by the MAC layer include a dedicated traffic channel (DTCH) and a multicast traffic channel (MTCH). The DTCH is a point-to-point channel, dedicated to one UE for the transfer of user information and can exist in both uplink and downlink. The MTCH is a point-to-multipoint downlink channel for transmitting traffic data from the network to the UE.

Uplink connections between logical channels and transport channels include the DCCH that can be mapped to the UL-SCH, the DTCH that can be mapped to the UL-SCH and the CCCH that can be mapped to the UL-SCH. Downlink connections between logical channels and transport channels include the BCCH that can be mapped to the BCH or DL-SCH, the PCCH that can be mapped to the PCH, the DCCH that can be mapped to the DL-SCH, and the DTCH that can be mapped to the DL-SCH, the MCCH that can be mapped to the MCH, and the MTCH that can be mapped to the MCH.

An RLC layer belongs to the L2. The RLC layer provides a function of adjusting a size of data, so as to be suitable for a lower layer to transmit the data, by concatenating and segmenting the data received from an upper layer in a radio section. In addition, to ensure a variety of quality of service (QoS) required by a radio bearer (RB), the RLC layer provides three operation modes, i.e., a transparent mode (TM), an unacknowledged mode (UM), and an acknowledged mode (AM). The AM RLC provides a retransmission function through an automatic repeat request (ARQ) for reliable data transmission. Meanwhile, a function of the RLC layer may be implemented with a functional block inside the MAC layer. In this case, the RLC layer may not exist.

A packet data convergence protocol (PDCP) layer belongs to the L2. The PDCP layer provides a function of header compression function that reduces unnecessary control information such that data being transmitted by employing IP packets, such as IPv4 or IPv6, can be efficiently transmitted over a radio interface that has a relatively small bandwidth. The header compression increases transmission efficiency in the radio section by transmitting only necessary information in a header of the data. In addition, the PDCP layer provides a function of security. The function of security includes ciphering which prevents inspection of third parties, and integrity protection which prevents data manipulation of third parties.

A radio resource control (RRC) layer belongs to the L3. The RLC layer is located at the lowest portion of the L3, and is only defined in the control plane. The RRC layer takes a role of controlling a radio resource between the UE and the network. For this, the UE and the network exchange an RRC message through the RRC layer. The RRC layer controls logical channels, transport channels, and physical channels in relation to the configuration, reconfiguration, and release of RBs. An RB is a logical path provided by the L1 and L2 for data delivery between the UE and the network. That is, the RB signifies a service provided the L2 for data transmission between the UE and E-UTRAN. The configuration of the RB implies a process for specifying a radio protocol layer and channel properties to provide a particular service and for determining respective detailed parameters and operations. The RB is classified into two types, i.e., a signaling RB (SRB) and a data RB (DRB). The SRB is used as a path for transmitting an RRC message in the control plane. The DRB is used as a path for transmitting user data in the user plane.

A non-access stratum (NAS) layer above the RRC layer performs functions, such as session management and mobility management.

**Hereinafter, a 5G network structure is described.**

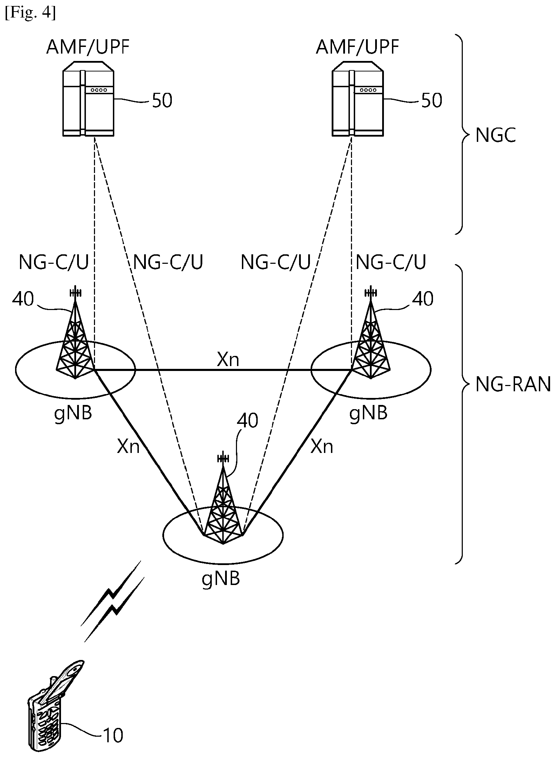

FIG. 4 shows a structure of a 5G system.

In case of an evolved packet core (EPC) having a core network structure of the existing evolved packet system (EPS), a function, a reference point, a protocol, or the like is defined for each entity such as a mobility management entity (MME), a serving gateway (S-GW), a packet data network gateway (P-GW), or the like.

On the other hand, in case of a 5G core network (or a NextGen core network), a function, a reference point, a protocol, or the like is defined for each network function (NF). That is, in the 5G core network, the function, the reference point, the protocol, or the like is not defined for each entity.

Referring to FIG. 4, the 5G system structure includes at least one UE 10, a next generation-radio access network (NG-RAN), and a next generation core (NGC).

The NG-RAN may include at least one gNB 40, and a plurality of UEs may be present in one cell. The gNB 40 provides the UE with end points of the control plane and the user plane. The gNB 40 is generally a fixed station that communicates with the UE 10 and may be referred to as another terminology, such as a base station (BS), a base transceiver system (BTS), an access point, or the like. One gNB 40 may be arranged in every cell. At least one cell may be present in a coverage of the gNB 40.

The NGC may include an access and mobility function (AMF) and a session management function (SMF) which are responsible for a function of a control plane. The AMF may be responsible for a mobility management function, and the SMF may be responsible for a session management function. The NGC may include a user plane function (UPF) which is responsible for a function of a user plane.

Interfaces for transmitting user traffic or control traffic may be used. The UE 10 and the gNB 40 may be connected by means of a Uu interface. The gNBs 40 may be interconnected by means of an X2 interface. Neighboring gNBs 40 may have a meshed network structure based on an Xn interface. The gNBs 40 may be connected to an NGC by means of an NG interface. The gNBs 40 may be connected to an AMF by means of an NG-C interface, and may be connected to a UPF by means of an NG-U interface. The NG interface supports a many-to-many-relation between the gNB 40 and the AMF/UPF 50.

A gNB host may perform functions such as functions for radio resource management, IP header compression and encryption of user data stream, selection of an AMF at UE attachment when no routing to an AMF can be determined from the information provided by the UE, routing of user plane data towards UPF(s), scheduling and transmission of paging messages (originated from the AMF), scheduling and transmission of system broadcast information (originated from the AMF or O&M), or measurement and measurement reporting configuration for mobility and scheduling.

An access and mobility function (AMF) host may perform primary functions such as NAS signalling termination, NAS signalling security, AS security control, inter CN node signalling for mobility between 3GPP access networks, idle mode UE reachability (including control and execution of paging retransmission), tracking area list management (for UE in idle and active mode), AMF selection for handovers with AMF change, access authentication, or access authorization including check of roaming rights.

A user plane function (UPF) host may perform primary functions such as anchor point for Intra-/inter-RAT mobility (when applicable), external PDU session point of interconnect to data network, packet routing & forwarding, packet inspection and user plane part of policy rule enforcement, traffic usage reporting, uplink classifier to support routing traffic flows to a data network, branching point to support multi-homed PDU session, QoS handling for user plane, e.g. packet filtering, gating, UL/DL rate enforcement, uplink traffic verification (SDF to QoS flow mapping), transport level packet marking in the uplink and downlink, or downlink packet buffering and downlink data notification triggering.

A session management function (SMF) host may perform primary functions such as session management, UE IP address allocation and management, selection and control of UP function, configuring traffic steering at UPF to route traffic to proper destination, controlling part of policy enforcement and QoS, or downlink data notification.

**Hereinafter, an RRC INACTIVE state of a** UE is described.

In the discussion on the NR standardization, an RRC_INACTIVE state (RRC inactive state) has been newly introduced in addition to the existing RRC_CONNETED state and RRC_IDLE state. The RRC_INACTIVE state may be a concept similar to a lightly connected mode which is under discussion in LTE. The RRC_INACTIVE state is a state introduced to efficiently manage a specific UE (for example, mMTC UE). A UE in the RRC_INACTIVE state performs a radio control procedure similarly to a UE in the RRC_IDLE state in order to reduce power consumption. However, the UE in the RRC_INACTIVE state maintains a connection state between the UE and a network similarly to the RRC_CONNECTED state in order to minimize a control procedure required when transitioning to the RRC_CONNECTED state. In the RRC_INACTIVE state, a radio access resource is released, but wired access may be maintained. For example, in the RRC_INACTIVE state, the radio access resource is released, but an NG2 interface between a gNB and am NGC or an S1 interface between an eNB and an EPC may be maintained. In the RRC_INACTIVE state, a core network recognizes that the UE is normally connected to a BS. On the other hand, the BS may not perform connection management for the UE in RRC_INACTIVE state.

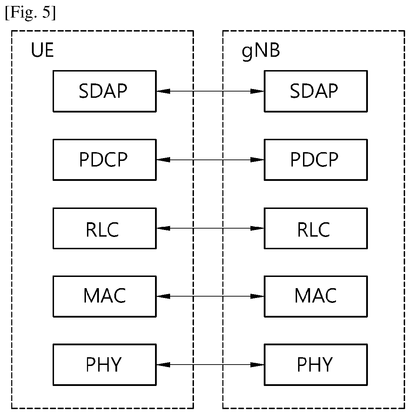

FIG. 5 shows the radio interface protocol for the user plane of the 5G system.

Referring to FIG. 5, the radio interface protocol of the 5G system with respect to the user plane may include a new layer called Service Data Adaptation Protocol (SDAP) as compared with the LTE system. The main services and functions of the SDAP layer are the mapping between the Quality of Service (QoS) flow and the data radio bearer (DRB), and the QoS flow ID (QFI) marking in both DL and UL packets. The single protocol entity of the SDAP can be configured for each individual PDU session, except for the DC (dual connectivity) where two entities can be configured.

**Hereinafter, a 5G RAN deployment scenario is described.**

The 5G RAN can be classified into a non-centralized deployment scenario, a co-deployed deployment scenario (E-UTRA), and a co-located deployment scenario according to the way in which the base station functions are arranged in a central unit and a distributed unit and a centralized deployment scenario and depending on coexistence with the 4G base station. In this specification, 5G RAN, gNB, Next Generation Node B, New RAN, and NR BS (New Radio Base Station) may mean a newly defined base station for 5G.

A UE is allowed to move within a RAN-based Notification Area (RNA) without notifying its movement to the network while being in RRC_INACTIVE. In other words, the UE in RRC_INACTIVE may initiate RAN-based location area update (RLAU) upon re-selecting to camp on a cell not belonging to the configured RNA. In addition RLAU may be periodically performed by the UE to notify the availability of the UE to the network.

In most cases, when a UE in RRC_INACTIVE moves to a cell not belonging to the configured RNA, the UE may perform RLAU, and after successful RLAU procedure, the UE may require at least new RNA, may resume ID(if needed) and RAN DRX cycle(if configured). However, if a UE in RRC_INACTIVE is in border area of configured RNA, the following corner case may also occur.

1. Based on a measurement and evaluation of neighbor cells around a UE in RRC_INACTIVE, the UE may move to a better cell outside the configured RNA, and may initiate RLAU procedure. However, upon the criteria is fulfilled, the UE may move back to a legacy cell which the UE has moved from by cell reselection.

2. Depending on the network implementation, the UE may move to an acceptable cell or barred cell. Then, the UE would try to find a suitable cell, and the UE may move to a legacy cell which the UE has moved from.

With the case above, if the UE in RRC_INACTIVE should perform the RLAU procedure immediately upon camping a new cell out of configured area, on-going RLAU in a new cell finally would fail because the UE would not be possible to receive a response message from the network. In addition, it is unclear for the UE what action the UE should take after returning to the old cell. Meanwhile, to delay the triggering of the RLAU is not the reasonable considering the possible MO/MT of the UE.

Hereinafter, to solve the problem mentioned above, method for performing RLAU according to an embodiment on present invention is described. Basically, if the UE receives "periodic RLAU timer for a UE in inactive condition (TpRLAU)" and TpRLAU expires, the UE initiates RLAU. In this embodiment, the TpRLAU may be referred as a first RLAU timer. The first RLAU timer may be initiated periodically by the first RLAU timer. Until TpRLAU expires, both the UE and the RAN node may be considered to be in an inactive condition with valid UE context stored. However, since there could be a RACH retransmission or transmission delay due to bad or weak signal, the UE can be provided the "guard timer for a UE in inactive condition (Tguard)" from the RAN node, Tguard can only be started after TpRLAU has expired. In this embodiment, the Tguard may be referred as a second RLAU timer. If a RLAU is triggered due to entrance a new cell not belonging to configured RNA, the UE may keep a TpRLAU before receiving a response to the request message of RRC connection resume procedure from the network, e.g., RRC connection resume message or RRC connection setup message(if the fall-back procedure is supported).

If the UE is provided with Tguard from the RAN node, it means the duration for a success of the periodic RLAU of the UE is increased. Thus, with this embodiment of present invention, since the duration of the periodic RLAU of the UE is increased, the probability of success of the RLAU may be increased. In addition, due to a mobility of the UE in inactive condition moving back and forth, the UE may frequently move out the RNA and comes back, both the UE and the network can maintain legacy inactive condition without additional signaling within TpRLAU + Tguard.

In this embodiment of present invention, a UE in inactive condition is at least a UE in RRC_INACTIVE in NR, in lightweight connection in LTE or in lightweight connection in eLTE. A RAN node is at least gNB in NR, eNB in LTE or eNB in eLTE.

According to the embodiment of present invention, the UE may operate as follow:
1) The UE in inactive condition initiates the procedure upon reselecting to camp on a new cell not belonging to the configured RNA,
2) if the new cell is suitable cell,
2) initiate RLAU but the RLAU fails because the UE moves back to a legacy cell,
3) if timer TpRLAU is configured and running,
4) stay in inactive condition with stored UE context without RLAU;
3) else if timer TpRLAU expires,
4) if timer Tguard configured and running
5) stay in inactive condition and initiates periodic RLAU with stored UE context;
4) else if Tguard expires or not configured,
5) move to RRC_IDLE and inform upper layers about leaving inactive condition
2) else if the cell is barred cell or acceptable cell, and the UE moves back to a legacy cell,
3) if timer TpRLAU is configured and running,
4) stay in inactive condition with stored UE context,
3) else if timer TpRLAU expires,
4) if timer Tguard configured and running
5) stay in inactive condition and initiates periodic RLAU with stored UE context;
4) else if Tguard expires or not configured,
5) move to RRC_IDLE and inform upper layers about leaving inactive condition;
2) else if the cell is barred cell or acceptable cell,
3) if timer TpRLAU is configured and running,
4) stay in inactive condition with stored UE context,
3) else if timer TpRLAU expires,
4) move to RRC_IDLE and inform upper layers about leaving inactive condition;

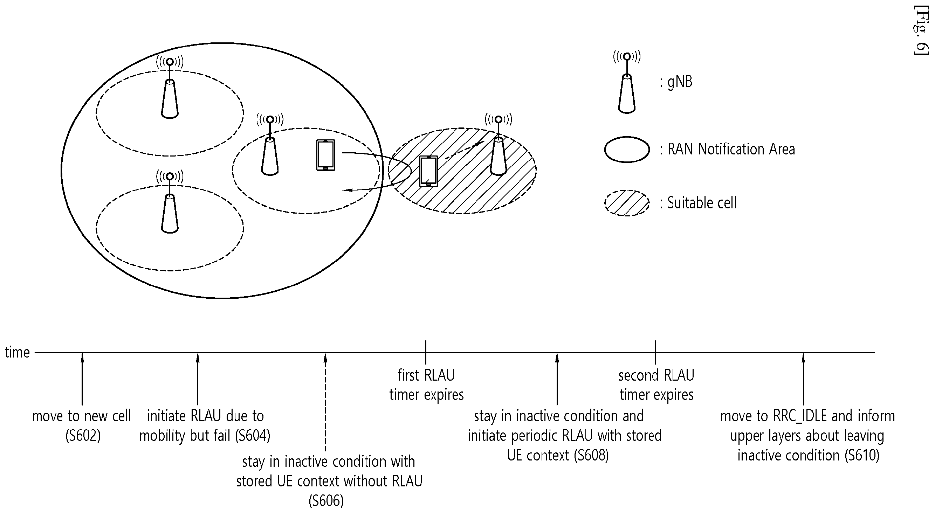

Fig. 6 shows an example of a method for performing RLAU according to an embodiment of the present invention. In this embodiment of present invention, it is assumed that the UE moves to a new cell and comes back to a legacy cell, and it shows a few different cases according to a time when the UE comes back to the legacy cell.

In step S602, the UE in inactive condition may initiate the procedure upon reselecting to camp on a new cell not belonging to the configured RNA.

In step S604, if the new cell is suitable cell, the UE may initiate RLAU but the RLAU fails because the UE moves back to the legacy cell. In this embodiment of present invention, it is assumed that the RLAU in the new cell is triggered but not successfully completed.

Hereinafter, a few different cases are introduced according to the time when the UE moves back to the legacy cell.

In step S606, it is assumed that the UE moves back to the legacy cell before the first RLAU timer expires. In specific, if timer TpRLAU (the first RLAU timer) is configured and running, the UE may stay in inactive condition with stored UE context without RLAU. That is, even though the first RLAU timer is initiated because the UE moves to a new cell, because the UE moves back to a legacy cell before the first RLAU timer expires, the UE may stay in inactive state and keep the stored UE context. In this case, the legacy cell may still have the UE context before the first RLAU timer expires.

In step S608, it is assumed that the UE moves back to the legacy cell after the first RLAU timer expires and before a second RLAU timer expires. In specific, else if timer TpRLAU (the first RLAU timer) expires, if timer Tguard (the second RLAU timer) configured and running, the UE may stay in inactive condition and initiates periodic RLAU with stored UE context. In this case, the RLAU is initiated because the first timer is expired, but the UE context may be kept because the second timer is still running. That is, even though the first RLAU timer expires after the UE moves to a new cell, the UE may stay in inactive state and initiate the periodic RLAU with the stored UE context because the second RLAU timer is still running. In other words, the second RLAU timer operates as a guard timer for the UE context. The second RLAU timer is configured to start when the first RLAU timer is expired.

In step S610, it is assumed that the UE moves back to the legacy cell after the second RLAU timer expires or the UE moves back to the legacy cell in case the second RLAU timer is not configured. In specific, if Tguard (the second RLAU timer) expires or not configured, the UE may move to RRC_IDLE and inform upper layers about leaving inactive condition.

If the RAN node does not configure Tguard, the step S608 would not happen. However, if the RAN node configure the timer Tguard, if the UE comes back to the legacy cell within the timer TpRLAU + the timer Tguard expiry after failure of the RLAU in the new cell, even if the UE has moved outside of the RNA, it can maintain inactive condition without additional signaling.

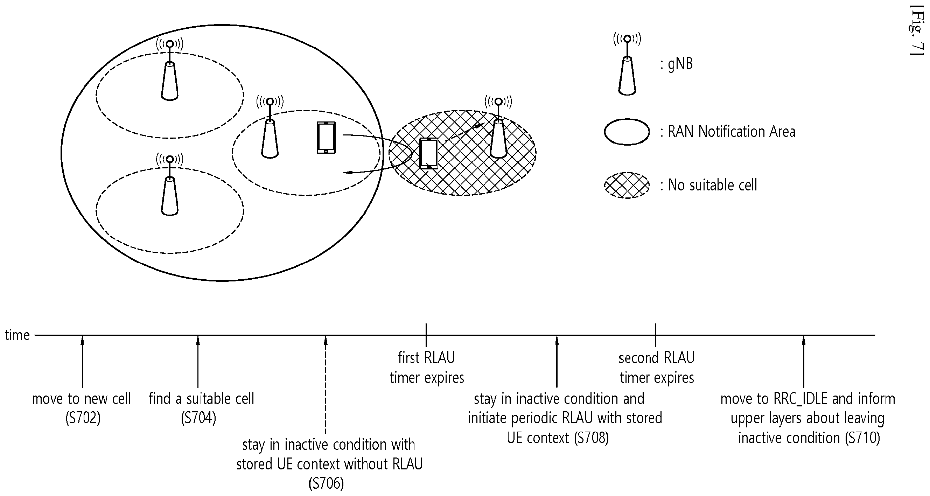

Fig. 7 shows another example of a method for performing RLAU procedure according to an embodiment of the present invention. In this embodiment of present invention, the new cell may be not suitable cell such as barred cell or acceptable cells.

In step S702, the UE in inactive condition may initiate the procedure upon reselecting to camp on a new cell not belonging to the configured RNA.

In step S704, if the new cell is barred cell or acceptable cell, then the UE may find a suitable cell. If the UE moves to not suitable cell such as barred cell or acceptable cells, the UE could not transmit the RLAU request message. Thus, the UE keeps searching a suitable cell to camp on. In other words, in this embodiment, it is assumed that the RLAU is not triggered because the new cell is not suitable, and the UE may move back to a legacy cell before finding a suitable cell.

Hereinafter, a few different cases are introduced according to the time when the UE moves back to the legacy cell.

In step S706, it is assumed that the UE moves back to the legacy cell before the first RLAU timer expires. In specific, if timer TpRLAU (the first RLAU timer) is configured and running, the UE may stay in inactive condition with stored UE context,

In step S708, it is assumed that the UE moves back to the legacy cell after the first RLAU timer expires and before a second RLAU timer expires. In specific, else if timer TpRLAU (the first RLAU timer) expires and the second RLAU timer is not expired, the UE may stay in inactive condition and initiates periodic RLAU with stored UE context.In step S710, it is assumed that the UE moves back to the legacy cell after the second RLAU timer expires or the UE moves back to the legacy cell in case the second RLAU timer is not configured. In specific, the UE may move to RRC_IDLE and inform upper layers about leaving inactive condition.

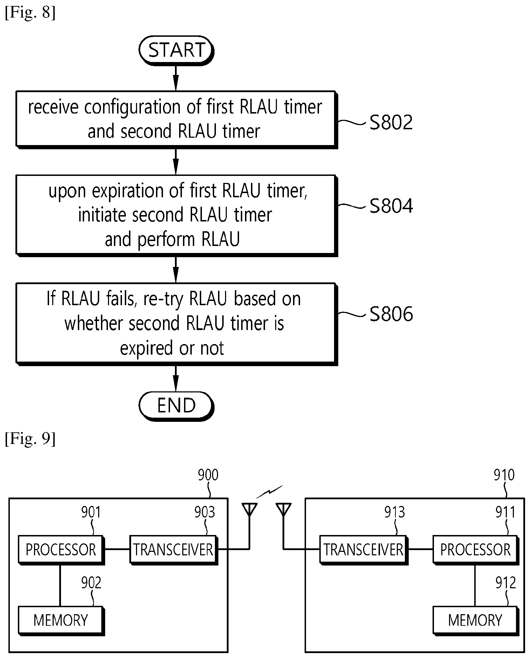

Fig. 8 is a flowchart illustrating a method of performing RLAU procedure according to an embodiment of the present invention. In this embodiment, the UE may be initially in inactive condition.

In step S802, the UE may receiving configurations for a first RLAU timer and a second RLAU timer. The first RLAU timer may be initiated when the UE move from a legacy cell to a new cell.

In step S804, upon expiration of the first RLAU timer, the UE may initiate the second RLAU timer and perform the RLAU procedure. The second RLAU timer may be initiated when the first RLAU timer is expired.

In step S806, if the RLAU procedure fails, the UE may re-try the RLAU procedure based on whether the second RLAU timer is expired or not. The RLAU procedure may fail when the UE moves back from the new cell to the legacy cell, before the RLAU procedure is successfully completed. The UE may find a suitable cell, if the new cell is barred cell. If the second RLAU timer is still running, the UE may attempt the RLAU procedure with stored UE context in the inactive condition. Further, if the second RLAU timer is expired, the UE may enter RRC idle condition and transmit an indication indicating that the UE is leaving the inactive condition.

FIG. 9 shows a communication system to implement an embodiment of the present invention.

A UE 900 includes a processor 901, a memory 902, and a transceiver 903. The memory 902 is coupled to the processor 901, and stores a variety of information for driving the processor 901. The transceiver 903 is coupled to the processor 901, and transmits and/or receives a radio signal. The processor 901 implements the proposed functions, procedures, and/or methods. In the aforementioned embodiments, an operation of the first network node may be implemented by the processor 901.

A network node 910 includes a processor 911, a memory 912, and a transceiver 913. The memory 912 is coupled to the processor 911, and stores a variety of information for driving the processor 911. The transceiver 913 is coupled to the processor 911, and transmits and/or receives a radio signal. The processor 911 implements the proposed functions, procedures, and/or methods. In the aforementioned embodiments, an operation of the second network node 910 may be implemented by the processor 911.

The processors 911 may include application-specific integrated circuit (ASIC), other chipset, logic circuit and/or data processing device. The memories may include read-only memory (ROM), random access memory (RAM), flash memory, memory card, storage medium and/or other storage device. The transceivers may include baseband circuitry to process radio frequency signals. When the embodiments are implemented in software, the techniques described herein can be implemented with modules (e.g., procedures, functions, and so on) that perform the functions described herein. The modules can be stored in memories and executed by processors. The memories can be implemented within the processors or external to the processors in which case those can be communicatively coupled to the processors via various means as is known in the art.

In view of the exemplary systems described herein, methodologies that may be implemented in accordance with the disclosed subject matter have been described with reference to several flow diagrams. While for purposed of simplicity, the methodologies are shown and described as a series of steps or blocks, it is to be understood and appreciated that the claimed subject matter is not limited by the order of the steps or blocks, as some steps may occur in different orders or concurrently with other steps from what is depicted and described herein. Moreover, one skilled in the art would understand that the steps illustrated in the flow diagram are not exclusive and other steps may be included or one or more of the steps in the example flow diagram may be deleted without affecting the scope of the present disclosure.

What has been described above includes examples of the various aspects. It is, of course, not possible to describe every conceivable combination of components or methodologies for purposes of describing the various aspects, but one of ordinary skill in the art may recognize that many further combinations and permutations are possible. Accordingly, the subject specification is intended to embrace all such alternations, modifications and variations that fall within the scope of the appended claims.

## Claims

1. A method for performing, by a user equipment, UE, in an inactive condition, a Radio Access Network, RAN, -based location area update, RLAU, procedure in a wireless communication system, the method comprising:
receiving (S802) configurations for a first RLAU timer and a second RLAU timer,
wherein the first RLAU timer is started after the UE reselects from a legacy cell of a RAN-based Notification area, RNA, to a new cell not belonging to the configured RAN-based Notification Area, RNA, and the second RLAU timer is initiated upon expiration of the first RLAU timer (S804);
performing the RLAU procedure;
identifying the RLAU procedure fails,
wherein the RLAU procedure fails based on that the UE moves back from the new cell to the legacy cell, before the RLAU procedure is successfully completed; and
re-trying (S806) the RLAU procedure based on whether the second RLAU timer is expired or not.

2. The method of claim 1, wherein the RLAU procedure is performed based on moving of UE from the legacy cell of the RNA to a new cell.

3. The method of claim 1, wherein the re-trying the RLAU procedure includes: if the second RLAU timer is still running,
attempting the RLAU procedure with stored UE context in the inactive condition.

4. The method of claim 1, wherein the re-trying the RLAU procedure includes: if the second RLAU timer is expired,
entering a Radio Resource Control, RRC, idle condition; and transmitting an indication indicating that the UE is leaving the inactive condition.

5. The method of claim 2, the method is further comprising:
finding a suitable cell, if the new cell is barred cell.

6. A user equipment, UE, (900) configured to operate in an inactive condition in a wireless communication system, the UE (900) comprising:
a transceiver (903) for transmitting or receiving a radio signal; and
a processor (901) coupled to the transceiver (903),
the processor (901) configured to:
receive configurations for a first Radio Access Network, RAN-based location area update, RLAU, timer and a second RLAU timer,
wherein the first RLAU timer is started after the UE reselects from a legacy cell of a configured RAN-based Notification Area, RNA, to a new cell not belonging to the configured RAN-based Notification Area, RNA, and the second RLAU timer is initiated upon expiration of the first RLAU timer, perform a RLAU procedure,
identify the RLAU procedure fails, wherein the RLAU procedure fails based on that the UE moves back from the new cell to the legacy cell, before the RLAU procedure is successfully completed, and
re-try the RLAU procedure based on whether the second RLAU timer is expired or not.

7. The UE (900) of claim 6, wherein the RLAU procedure is performed when the UE move from the legacy cell of the RNA to a new cell.

8. The UE (900) of claim 7, wherein the processor (901) is further configured to:
if the second RLAU timer is still running,
attempt the RLAU procedure with stored UE context in the inactive condition.

9. The UE (900) of claim 7, wherein the processor (901) is further configured to:
if the second RLAU timer is expired,
enter a Radio Resource Control, RRC, idle condition; and
transmit an indication indicating that the UE is leaving the inactive condition.

10. The UE (900) of claim 7, wherein the processor (901) is further configured to:
find a suitable cell, if the new cell is barred cell.

## Patentansprüche

1. Verfahren zur Durchführung eines Funkzugangsnetzwerk-, RAN-, basierten Standortbereichsaktualisierungs-, RLAU-, Verfahrens in einem inaktiven Zustand durch ein Benutzergerät, UE, in einem Drahtloskommunikationssystem, wobei das Verfahren aufweist:
Empfangen (S802) von Konfigurationen eines ersten RLAU-Zeitgebers und eines zweiten RLAU-Zeitgebers,
wobei der erste RLAU-Zeitgeber gestartet wird, nachdem das UE von einer Altsystemzelle eines RNA-basierten Benachrichtigungsbereichs, RNA, eine neue Zelle neu auswählt, die nicht zu dem konfigurierten RAN-basierten Benachrichtigungsbereich, RNA, gehört, und wobei der zweite RLAU-Zeitgeber nach dem Auflauf des ersten RLAU-Zeitgebers ausgelöst wird (S804);
Durchführen des RLAU-Verfahrens;
Bestimmen, dass das RLAU-Verfahren fehlschlägt,
wobei das RLAU-Verfahren basierend darauf fehlschlägt, dass das UE sich von der neuen Zelle zu der Altsystemzelle zurückbewegt, bevor das RLAU-Verfahren erfolgreich abgeschlossen wird; und
erneutes Versuchen (S806) des RLAU-Verfahrens basierend darauf, ob der zweite RLAU-Zeitgeber abgelaufen ist oder nicht.

2. Verfahren nach Anspruch 1, wobei das RLAU-Verfahren basierend darauf durchgeführt wird, dass das UE sich von der Altsystemzelle des RNA zu einer neuen Zelle bewegt.

3. Verfahren nach Anspruch 1, wobei das erneute Versuchen des RLAU-Verfahrens umfasst: wenn der zweite RLAU-Zeitgeber immer noch läuft,
Versuchen des RLAU-Verfahrens mit dem gespeicherten UE-Kontext in dem inaktiven Zustand.

4. Verfahren nach Anspruch 1, wobei das erneute Versuchen des RLAU-Verfahrens umfasst: wenn der zweite RLAU-Zeitgeber abgelaufen ist,
Eintreten in einen Funkressourcensteuerungs-, RRC-, Leerlaufzustand; und
Übertragen einer Anzeige, die anzeigt, dass das UE den inaktiven Zustand verlässt.

5. Verfahren nach Anspruch 2, wobei das Verfahren ferner aufweist:
Finden einer geeigneten Zelle, wenn die neue Zelle eine gesperrte Zelle ist.

6. Benutzergerät, UE, (900), das konfiguriert ist, um in einem inaktiven Zustand in einem Drahtloskommunikationssystem zu arbeiten, wobei das UE (900) aufweist:
einen Transceiver (903) zur Übertragung oder zum Empfang eines Funksignals; und
einen mit dem Transceiver (903) gekoppelten Prozessor (901),
wobei der Prozessor (901) konfiguriert ist, um:
Konfigurationen für einen ersten Funkzugangsnetzwerk-, RAN-, basierten Standortbereichsaktualisierungs-, RLAU-, Zeitgeber und einen zweiten RLAU-Zeitgeber zu empfangen,
wobei der erste RLAU-Zeitgeber gestartet wird, nachdem das UE von einer Altsystemzelle eines RAN-basierten Benachrichtigungsbereichs, RNA, eine neue Zelle neu auswählt, die nicht zu dem konfigurierten RAN-basierten Benachrichtigungsbereich, RNA, gehört, und wobei der zweite RLAU-Zeitgeber nach dem Auflauf des ersten RLAU-Zeitgebers ausgelöst wird (S804);
das RLAU-Verfahren durchzuführen;
zu bestimmen, dass das RLAU-Verfahren fehlschlägt, wobei das RLAU-Verfahren basierend darauf fehlschlägt, dass das UE sich von der neuen Zelle zu der Altsystemzelle zurückbewegt, bevor das RLAU-Verfahren erfolgreich abgeschlossen wird; und
das RLAU-Verfahren basierend darauf, ob der zweite RLAU-Zeitgeber abgelaufen ist oder nicht, erneut zu versuchen.

7. UE (900) nach Anspruch 6, wobei das RLAU-Verfahren basierend darauf durchgeführt wird, dass das UE sich von der Altsystemzelle des RNA zu einer neuen Zelle bewegt.

8. UE (900) nach Anspruch 7, wobei der Prozessor (901) ferner konfiguriert ist, um:
wenn der zweite RLAU-Zeitgeber immer noch läuft,
das RLAU-Verfahren mit dem gespeicherten UE-Kontext in dem inaktiven Zustand erneut zu versuchen.

9. UE (900) nach Anspruch 7, wobei der Prozessor (901) ferner konfiguriert ist, um:
wenn der zweite RLAU-Zeitgeber abgelaufen ist,
in einen Funkressourcensteuerungs-, RRC-, Leerlaufzustand einzutreten; und
eine Anzeige, die anzeigt, dass das UE den inaktiven Zustand verlässt, zu übertragen.

10. UE (900) nach Anspruch 7, wobei der Prozessor (901) ferner konfiguriert ist, um eine geeignete Zelle zu finden, wenn die neue Zelle eine gesperrte Zelle ist.

## Revendications

1. Procédé de réalisation, par un équipement utilisateur, UE, dans un état inactif, d'une procédure de mise à jour de zone de localisation basée sur réseau d'accès radio, RAN, RLAU, dans un système de communication sans fil, le procédé comprenant :
la réception (S802) de configurations pour un premier minuteur RLAU et un second minuteur RLAU,
dans lequel le premier minuteur RLAU est démarré après que l'UE resélectionne depuis une cellule existante d'une zone de notification basée sur RAN, RNA, à une nouvelle cellule n'appartenant pas à la zone de notification basée sur RAN, RNA, configurée, et le second minuteur RLAU est lancé à l'expiration du premier minuteur RLAU (S804) ;
la réalisation de la procédure RLAU ;
l'identification d'un échec de la procédure RLAU ;
dans lequel l'échec de la procédure RLAU est basé sur le retour de l'UE de la nouvelle cellule à la cellule existante, avant l'accomplissement avec succès de la procédure RLAU ; et
la réalisation d'une nouvelle tentative (S806) de la procédure RLAU selon que le second minuteur RLAU a expiré ou non.

2. Procédé selon la revendication 1, dans lequel la procédure RLAU est réalisée sur la base du déplacement de l'UE de la cellule existante de la RNA à une nouvelle cellule.

3. Procédé selon la revendication 1, dans lequel la réalisation d'une nouvelle tentative de la procédure RLAU inclut : si le second minuteur RLAU est toujours en cours d'exécution,
la tentative de la procédure RLAU avec un contexte d'UE stocké dans l'état inactif.

4. Procédé selon la revendication 1, dans lequel la réalisation d'une nouvelle tentative de la procédure RLAU inclut : si le second minuteur RLAU a expiré, l'entrée dans un état de veille de commande de ressource radio, RRC ; et
la transmission d'une indication indiquant que l'UE quitte l'état inactif.

5. Procédé selon la revendication 2, le procédé comprenant en outre :
la découverte d'une cellule appropriée, si la nouvelle cellule est une cellule interdite.

6. Equipement utilisateur, UE, (900) configuré pour fonctionner dans un état inactif dans un système de communication sans fil, l'UE (900) comprenant :
un émetteur-récepteur (903) pour transmettre ou recevoir un signal radio ; et
un processeur (901) couplé à l'émetteur-récepteur (903),
le processeur (901) étant configuré pour :
recevoir des configurations pour un premier minuteur de mise à jour de zone de localisation basée sur réseau d'accès radio, RAN, RLAU, et un second minuteur RLAU,
dans lequel le premier minuteur RLAU est démarré après que l'UE resélectionne depuis une cellule existante d'une zone de notification basée sur RAN, RNA, configurée à une nouvelle cellule n'appartenant pas à la zone de notification basée sur RAN, RNA, configurée, et le second minuteur RLAU est lancé à l'expiration du premier minuteur RLAU,
réaliser une procédure RLAU,
identifier un échec de la procédure RLAU, dans lequel l'échec de la procédure RLAU est basé sur le retour de l'UE de la nouvelle cellule à la cellule existante, avant l'accomplissement avec succès de la procédure RLAU, et
réaliser une nouvelle tentative de la procédure RLAU selon que le second minuteur RLAU a expiré ou non.

7. UE (900) selon la revendication 6, dans lequel la procédure RLAU est réalisée lorsque l'UE se déplace de la cellule existante de la RNA à une nouvelle cellule.

8. UE (900) selon la revendication 7, dans lequel le processeur (901) est en outre configuré pour :
si le second minuteur RLAU est toujours en cours d'exécution,
tenter la procédure RLAU avec un contexte d'UE stocké dans l'état inactif.

9. UE (900) selon la revendication 7, dans lequel le processeur (901) est en outre configuré pour :
si le second minuteur RLAU a expiré,
entrer dans un état de veille de commande de ressource radio, RRC ; et
transmettre une indication indiquant que l'UE quitte l'état inactif.

10. UE (900) selon la revendication 7, dans lequel le processeur (901) est en outre configuré pour :
découvrir une cellule appropriée, si la nouvelle cellule est une cellule interdite.
